# EUROPEAN PATENT SPECIFICATION

(11) **EP 1 705 201 B1**
(45) Date of publication and mention of the grant of the patent: **18.06.2008**
(21) Application number: 05425172.3
(22) Date of filing: 24.03.2005
(51) Int. Cl.: C08G 63/80

(54) **Method of application of a reactive atmosphere for continuous and/or discontinuous solid phase polymerisation of polyester**
Verfahren der Anwendung einer reaktiven Atmosphäre zur kontinuerlichen oder diskontinuerlichen Festphasenpolymerization von Polyestern
Méthode d'application d'une atmosphère réactive pour la polymérisation discontinue ou continue en phase solide de polyester

(43) Date of publication of application: 27.09.2006
(73) Proprietor: Cavaglia', Giuliano, 10020 Pessione Fraz. di Chieri (TO) (IT)
(72) Inventor: Cavaglia', Giuliano, 10020 Pessione Fraz. di Chieri (TO) (IT)
(74) Representative: Robba, Pierpaolo

(56) References cited:
- EP-A- 0 807 656
- EP-A- 0 916 394
- EP-A- 1 013 691
- WO-A-00/49065
- WO-A-03/078502
- US-A- 3 953 404
- US-A- 4 387 213
- US-A- 4 590 259
- US-A- 5 296 587
- US-A- 5 393 871
- DATABASE WPI Section Ch, Week 200444 Derwent Publications Ltd., London, GB; Class A23, AN 2004-462876 XP002339495 -& JP 2004 123917 A (MITSUBISHI CHEM CORP) 22 April 2004 (2004-04-22)

## Description

### DESCRIPTION OF THE INVENTION

The invention concerns a reactive atmosphere or gaseous composition and a method of application of the same in processes for the continuous and/or discontinuous solid phase polymerisation of polyester.

More precisely, the invention concerns a reactive atmosphere or gaseous composition applicable in processes for the continuous and/or discontinuous solid phase polymerisation of polyester in order to increase its molecular weight.

It is known that the molecular weight of a polyester can be evaluated by the measure of its intrinsic viscosity IV ("Intrinsic Viscosity").

It is also known that the increase of the molecular weight of a polyester can be achieved by subjecting low molecular weight polyesters, preferably under granular or chip form, to a solid phase polymerisation process that can be carried out in a reactor of the static bed type (so-called because the polymer bed is not fluidised) or of the continuous moving bed type or of the fluidised bed type (this latter only if the granules size is as small as to allow it) or of the stirred bed type, having a substantially cylindrical/tubular or parallelepipedal shape, vertical or horizontal, in case rotary and slightly inclined.

Moving bed or static bed solid phase polymerisation processes, particularly intended for polyethylene terephthalate (PET), wherein temperatures comprised in the range 180-245 °C are applied, are known, for instance, from US 3,405,098, US 4,064,112, US 4,161,578, US 4,223,128, US 4,238,593, US 5,408,035, US 5,536,810, US 5,590,479, US 5,708,124, EP 0 222 714 and from publications WO 2004/018541 and WO 2004/058852 in the name of the applicant.

According to the teaching of the above-mentioned documents, the solid phase polymerisation is preceded by a crystallisation step that can be carried out at a lower temperature (see, for instance, US 3,405,098, US 4,161,578 and US 4,223,128), at the same temperature (see, for instance, EP 0 222 714) or at a higher temperature (see, for instance, US 4,064,112) with respect to the temperature applied in the following polymerisation thermal treatment.

The purpose of the crystallisation step prior to the solid phase polymerisation is to prevent the sticking of the granules during the polymerisation process, especially at the highest temperatures.

Always according to the teaching of the above-mentioned documents, the reaction of solid phase polymerisation (as also all the other process steps occurring at temperatures higher than about 160 °C), in any of the nowadays commercially available processes, occurs in a purging gas flow, said purging gas preferably consisting of an inert atmosphere (for instance, nitrogen, helium, noble gases, carbon dioxide, etc.) or, alternatively, of air (mixture 21 %/79% by volume of oxygen/nitrogen) at temperatures lower than the thermal level generating reactions of oxidative degradation with consequent depression of the optical properties of the polyester and/or at low moisture content, always for preventing degradative reaction of the hydrolysis type; according to the known art, the purging gas is mainly useful for removing the unwanted by-products such as glycols, 1,4 dioxane, dioxolane, water and acetaldehyde that are produced during the polymerisation.

It is also known the use of an inert gas flow, in case containing reactive molecules, in the crystallisation step preceding the solid phase polymerisation. For instance, the International Patent application WO 03/078502 discloses a process of production of modified thermoplastic polyesters, wherein the polymeric matrix is modified in order to achieve a variation of the crystallisation behaviour.

Such process provides an initial step of contact between the thermoplastic polyester at the solid state and an inert gas containing at least an amino group known for the property of being a nucleating agent of crystallisation (preferably, primary amines -NH₂) and, optionally, a reactive functional group selected among, for instance, anhydrides, isocyanates, epoxides and oxoazolines.

US 3,953,404 discloses a process for producing poly(1,4-butylene terephthalate) through solid state polymerisation carried out in the presence of an inert atmosphere containing a minor amount of 1,4-butanediol, said poly(1,4-butylene terephthalate) having a high melt viscosity but without formation of insoluble and infusible gel particles on the outer surfaces, or "skin", of the molecules.

US 4,387,213 discloses a process for producing highly viscous linear polyalkylene terephthalates by treating with alkanediols and then condensing in the solid phase, at an elevated temperature and in an inert gas stream.

US 5,393,871 discloses a process for producing linear polyesters wherein a precursor polyester is formed into particles and further polymerised in the solid state, said precursor polyester particles being contacted with the vapour of water or of an organic compound having one or more hydroxyl groups.

WO 00/49065 discloses a process for the addition of volatile materials, such as catalysts or treatment agents, to pre-polymers prior to or during solid state polymerisation processes of condensation polymers.

US 4,590,259 discloses a process for increasing the molecular weight of solid linear poly(alkylene terephthalates) containing a minor amount of esterification catalyst by contacting at least one polyester, in the form of particles, with a mixture of an inert gas and at least one aliphatic diol in the gaseous state and then solid state polymerising.

JP 2004-123917 discloses a process for manufacturing a high-quality polyester resin having a low cyclic trimer content at a high polymerisation rate by producing a polyester pre-polymer, heat treating said pre-polymer in a gas mixture containing an inert gas and water and/or ethylene glycol and then solid state polymerising.

In other words, in any of the today commercially available processes, no component of the purging gas stream actively takes part in the reaction of solid phase polymerisation, and no component of said purging gas stream cooperates to perform the required molecular weight increase, and therefore it is customary to say that the process of solid phase polymerisation occurs in "inert atmosphere".

Outstanding aspects of the solid phase polymerisation processes are described hereinafter.

Firstly, a steady and uninterrupted flow of polyester granules must be maintained. As a consequence, it is highly important that agglomeration and sticking of polyester granules are avoided, since they would impede the smooth flow of granules and they would make difficult the discharge of the product from the reactor, thereby causing the loss of plant control.

Secondly, a suitable combination of residence time and temperature of granules in the reactor is required to achieve the wanted molecular weight, which is measurable, as previously indicated, in terms of intrinsic viscosity IV. Since the reaction rate increases with temperature increase, and IV increases with residence time increase in the reactor, wanted IV can be attained either by using a relatively long residence time, in combination with a relatively low temperature, or a relatively short residence time in combination with a relatively high temperature. However, the ideal combination of residence time and temperature must be chosen taking into account the first requisite indicated above, i.e. the need to maintain a linear flow, thereby avoiding the formation of granules agglomeration and the sticking phenomenon.

Thirdly, the flow regime of the polyester granules processed inside the solid phase polymerisation reactor is required to be as close as possible to the ideal plug-flow behaviour. This way all the polyester granules passing inside the reactor undergo the same processing conditions and a narrow molecular weight distribution in the obtained product and, more in general, a narrow distribution of polymerised granules final characteristics, which is a key factor for the correct performance during the subsequent steps in the manufacturing of the product having increased molecular weight, will be achieved.

A well designed solid phase polymerisation industrial scale plant must be capable of continuously producing products having intrinsic viscosity IV in compliance with the required specifications at a sufficiently high throughput. The currently used plants (for instance Buehler, UOP-Sinco, Hosokawa-Bepex, Zimmer) employ single vertical cylindrical reactors 10 to 40 meters high or multiple reactors, always vertical. In those plants the reactor is operated at a temperature comprised between 200 to 230 °C and at a granules moving velocity comprised between 1.00 to 2.52 meters per hour. Among these ranges of temperature, bed height and granules velocity, the choice to achieve a product with the wanted IV can be made. These conventional currently used plants allow to produce polyethylene terephthalate (PET) resins having an IV of 0.72 to 0.86 dl/g, using PET pre-polymers with an IV comprised between 0.55 and 0.65 dl/g. These conventional plants can therefore increase the polymer IV by about 0.12-0.25 dl/g.

For some specific applications, such as for instance the manufacturing of technical/industrial articles (luggage, cords, conveyor belts, etc.) wherein PET with IV comprised between 0.95 and 1.05 dl/g is used or the manufacturing of tyre cords starting from PET pre-polymers with a typical IV comprised between 0.55 and 0.65 dl/g or still the manufacturing of standard bottles where the initial IV of the pre-polymer is 0.25-0.45 dl/g, it is necessary however to increase IV by more than 0.25 dl/g.

This result can hardly be achieved and it often can not be achieved in a conventional plant using vertical reactors.

In a conventional process, there are two ways to raise product IV: increasing the reactor temperature or increasing the residence time of granules in the reactor.

The residence time in the reactor is constrained by bed height and granules velocity; it can be increased by either increasing the bed height or by decreasing the granules velocity. Increasing the reactor diameter allows an increase in the throughput rate, but not in the residence time at constant granule velocity.

On the other hand, if the reactor temperature is raised to increase the final product IV, polymer sticking tendency will consequently increase. To prevent polymer sticking, bed height has to be decreased or granules velocity has to be increased. However, both these modifications reduce the residence time in the reactor and nullify the effect of the temperature increase.

Alternatively, if the residence time in the reactor is increased either by increasing the bed height (assuming there is a sufficient reactor height) or by reducing the granules velocity, an increase of the polymer sticking tendency is caused.

To prevent the sticking phenomenon, the reactor temperature must be decreased and this, once again, nullifies the effect of the increased residence time on the product final IV.

These constraints limit the ability of conventional plants, which use single or multiple vertical reactors, of increasing the polymer intrinsic viscosity IV.

Less limited to this respect are the processes disclosed in publications WO 2004/018541 (rotary inclined horizontal cylindrical reactor) and WO 2004/058852 (multistage fluidised bed for small size polyester granules) in the name of the same applicant; the point remains that even in these processes the reaction temperature must be comprised in the range between 200 and 230 °C.

A similar situation is met when an industrial scale plant with capacity above 450 metric tons per day has to be designed according to conventional continuous solid phase polymerisation processes.

In fact, in a conventional process, there are two ways to reach high plant production capacity: again by increasing the reactor temperature or by increasing the product volume ("hold-up") in the reactor.

As far as drawbacks coming from the temperature increase are concerned, the same above described issues have to be considered.

On the other hand, the product volume ("hold-up") of polyester granules in the reactor is constrained by bed height, reactor diameter and granule velocity. If the product volume ("hold-up") is increased either by increasing bed height or reactor diameter, or by decreasing granules velocity, the polymer sticking tendency will increase too.

As a consequence, these constraints limit the maximum capacity of conventional solid phase polymerisation processes, which use one or more vertical cylindrical reactors.

Nowadays, the growth in polyester and PET demand has given rise to a need for solid phase polymerisation processes by means of which it is possible to achieve a higher increase of polyester molecular weight and a higher production capacity, typically higher than 400 metric tons per day on single plant.

The purpose of the present invention is therefore to overcome the limitations of continuous and/or discontinuous solid phase polymerisation processes of polyester known so far, by permitting to achieve better results in terms of increased intrinsic viscosity of the polyester itself.

Another purpose of the invention is to achieve high production capacities in continuous and/or discontinuous solid phase polymerisation processes of polyester.

As aforesaid, in solid phase polymerisation plants also the reaction temperature and the thermal level of all the process steps must be sufficient for the evolution of the process steps and for the reaction to occur: it is, therefore, a further purpose of the invention to decrease the reaction temperature and the thermal level of all the process steps, consequently decreasing the costs originating from the thermal energy use.

A further purpose of the invention is to increase the production capacity of existing plants, built and operating according to conventional technologies, and/or to make the operating conditions less critical in terms of temperature, with limited capital investment cost associated to existing plant refurbishing.

These and other purposes are achieved with the reactive atmosphere or gaseous composition and with the method of application of the same in processes for the continuous and/or discontinuous solid phase polymerisation of polyester according to the invention, as claimed in the attached claims.

Advantageously, the use of a reactive atmosphere applicable to any process for the continuous and/or discontinuous solid phase polymerisation of polyester according to the invention allows to achieve higher molecular weight increases of the treated polyester when compared with the ones achievable with the conventional processes of the known prior art, furthermore avoiding unwanted agglomeration phenomena and other side effects.

Advantageously, moreover, the use of a reactive atmosphere applicable to any process for the continuous and/or discontinuous solid phase polymerisation of polyester according to the invention allows to achieve higher production capacities when compared with the plants exploiting the conventional processes.

Advantageously, it is also possible to achieve a reduction of thermal energy consumption due to the decreased reaction temperature and to the low thermal level of all process steps with respect to conventional processes.

It is furthermore possible to advantageously apply the reactive atmosphere according to the invention to any solid phase polymerisation process nowadays commercially available, in existing plants too, whose adaptation requires a limited capital investment cost.

The invention will be now described in detail also with reference to the attached drawings, provided by way of not limiting example, in which:
- Fig. 1 shows a simplified scheme of application of the reactive atmosphere according to the invention to a conventional moving bed solid phase polymerisation process (for instance, Buehler, UOP-Sinco, Hosokawa-Bepex, Zimmer);
- Fig. 2A shows a schematic representation of the diffusion step of the reactive atmosphere inside the polyester granules;
- Fig. 2B shows a schematic representation of the reaction step of the reactive substance with the polyester macromolecules.

The invention substantially consists of introducing a reactive substance, or a mixture of reactive substances, under gas and/or aerosol phase, into a purging inert gas stream recirculating through the different process steps and, in particular, coming into contact with the surface of the polyester granules in the solid phase polymerisation step; the gas and/or aerosol phase within which the reactive substance, or the mixture of reactive substances, is diluted, therefore transforms the purging stream from inert (inert atmosphere) to reactive (reactive atmosphere or reactive gaseous composition).

The considered reactive substances, taken singly and/or in mixture, belong by way of example to the categories of the di-epoxides, di-anhydrides, di-isocyanates, bis(oxoazolines), bis(di-hydro-oxoazines) and, in particular, they are molecules having reactive groups or reactive end-groups with respect to the constitutive groups of the macromolecules forming the polyesters; the reactive groups must be at least in the number of two because the aforesaid reactive substances act as chain extension units ("chain extenders") to achieve polymerisation degree increases and, therefore, higher, and/or faster, and/or at a lower temperature IV values.

Any of the previously cited categories (di-epoxides, di-anhydrides, di-isocyanates, etc.) consists of a series of molecules having molecular weights gradually increasing and chemical-physical properties different one from another; within each category, the various molecules belonging thereof are joined by the fact that they have the same end groups, which are distinguished to be reactive with respect to the functional groups of the polyester macromolecules.

As far as the introduction of the reactive substance, or of the mixture of reactive substances, under gas and/or aerosol phase, into the purging inert gas stream is concerned, it is necessary to specify that, preferably, the reactive substance, or the mixture of reactive substances, is diluted in a carrying fluid to form a fluid stream, which is liquid at the feeding standard operative conditions (room temperature, pressure = + 50 ÷ + 450 mbar g.) into the contactor in the process according to the present invention; said fluid stream is used to make reactive the purging inert gas stream, by contacting said two streams in a gas-liquid contactor. In particular, in the gas-liquid contactor, during the contact time between the two phases, through the contact area between the two phases, an amount of fluid stream, containing the reactive substance or the mixture of reactive substances, depending on the respective vapour pressures at the operative conditions of pressure and temperature (temperature = + 50 ÷ + 80 °C; pressure = + 50 ÷ + 450 mbar g.), passes into the purging gas stream, under gas and/or aerosol phase, according to the turbulence degree developed from the gas-liquid contactor itself. This way, the purging inert gas stream fed into the gas-liquid contactor becomes reactive from inert as it was.

The preferred mixing proportions, between the reactive substance, or the mixture of reactive substances, and the carrying fluid, provide that the reactive substance, or the mixture of reactive substances, is present in an amount < 50% by weight, more preferably < 20% by weight. The mixing between the reactive substance, or the mixture of reactive substances, and the carrying fluid takes place according to known mixing techniques of two fluid phases, or by means of liquid-liquid contactors such as, for instance, liquid-liquid static mixers, stirred containers, pulsated columns and stirred plates columns. The mixture preparation is carried out under pressure and temperature conditions at which both the carrying fluid and the reactive substance, or the mixture of reactive substances, are in the liquid phase so to originate a liquid phase fluid stream to be introduced in the following gas-liquid contactor, within which such fluid stream preferably saturates the purging gas stream.

The carrying fluid can consists of one or more substances in mixture belonging to the organic chemistry, preferably aromatic and non aromatic hydrocarbons, having a diffusivity into the PET of at least 1x10⁻¹² m²/s, (if measured at 150 °C and at atmospheric pressure); by way of example, the carrying fluid can consists of orto-, meta- or para-xylene or mixed xylenes.

It is, nevertheless, also possible that the reactive substance, or the mixture of reactive substances, is introduced as such into the purging gas stream, that is without previous dilution and therefore without the carrying aid of the carrying fluid.

It is, furthermore, also possible that the reactive substance, or the mixture of reactive substances, as such or diluted into the carrying fluid, and/or the carrying fluid and/or a portion of purging gas and /or a further purging gas stream and/or a different purging gas stream are directly and separately introduced into the solid phase polymerisation reactor.

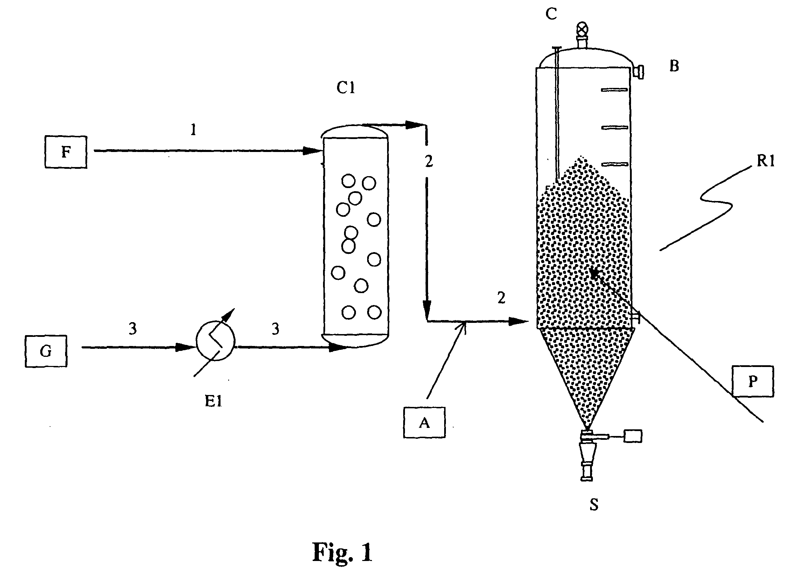

The method of application of the above-mentioned reactive substances introduced into the purging gas stream, which will be hereinafter disclosed with reference to Fig. 1, comprises the steps of:
- providing a reactive substance, or a mixture of reactive substances, R with respect to polyesters;
- preparing a fluid stream F preferably by diluting the reactive substance, or the mixture of reactive substances, R in a carrying fluid or "carrier" V;
- providing a purging inert gas stream G;
- feeding the fluid stream F from top into a gas-liquid contactor C1 and the purging inert gas stream G from bottom of said contactor, wherein the creation of contact area between the phases and the residence time allow to reach up to preferably saturate said stream G with said stream F, thus originating a reactive gas stream or reactive atmosphere or gaseous composition A;
- providing a solid phase polymerisation reactor R1 loaded with low molecular weight polyester granules P, crystallised and at high temperature, of at least a polyester;
- feeding the reactive gas stream A into the reactor R1 and make it flow in contact with the polyester granules P, thus allowing that diffusion phenomena of fluid F occur from outside each granule to inside thereof;
- letting that, once arrived inside the granule, preferably thanks to the carrying action of the carrying fluid V, the reactive substance R reacts with the polyester macromolecules through a mainly polyaddition mechanism.

As far as the reactive substance, or the mixture of reactive substances, R is concerned, as already previously stated, it must have reactive groups or reactive end-groups with respect to the constitutive groups of the macromolecules forming the polyesters.

As far as the fluid stream F is concerned, it is preferably obtained by diluting the reactive substance, or the mixture of reactive substances, R in a carrying fluid or "carrier" V, said carrying fluid V having a high volatility and high diffusion coefficient in the polyester and preferably consisting of paraxylene or mixed xylenes; as already previously stated, the fluid stream F can also consists of the only reactive substance, or the mixture of reactive substances, R.

This fluid stream F is in the liquid phase when fed into the gas-liquid contactor C1 and has a temperature lower than its boiling point, that is lower than the boiling point of the carrying fluid V and/or the reactive substance R, which form said fluid stream F.

As far as the purging inert gas stream G is concerned, it must be beforehand purified and heated inside a suitable device E1, for instance inside a heat exchanger, up to a temperature in the range 50 ÷ 80 °C and in any case lower than the boiling point of the fluid stream F, that is of at least 20 °C lower than the boiling point of the carrying fluid V and/or the reactive substance R, which form said fluid stream F.

The fluid stream F and the purging inert gas stream G are fed in counter-current flow or in co-current flow into a gas-liquid contactor C1 of any type, for instance a bubble column, a plates column, a Venturi washing device ("Venturi scrubber"), a gas-liquid static mixer or a spray tower, wherein the creation of contact area between the phases and the residence time allow to reach up to preferably saturate said stream G with said stream F, thus originating a reactive gas stream or reactive atmosphere or gaseous composition A.

Said gas-liquid contactor C1 must operate at a temperature lower than the boiling point of the fluid stream F, that is at a temperature lower than both the boiling point of the carrying fluid V and the boiling point of the substance or mixture of reactive substances R, which form the fluid stream F itself.

Due to the multiplicity of reactive substances R and carrying fluids V that can be used according to the present invention, the residence time in the gas-liquid contactor C1 will be defined, during the design stage of the contactor itself, as τ_{C1} ≥ τ_{S50%}, where τ_{S50%} is the contact time between the phases necessary to reach the 50% of saturation of the fluid stream F in the purging gas stream G at the operative conditions of pressure and temperature (temperature = + 50 ÷ + 80 °C; pressure = + 50 ÷ + 450 mbar g.) in the contactor used in the process according to the present invention; the actual content of fluid stream F must be equal at least to 0.025% by weight, preferably equal at least to 0.05% by weight, of the reactive gas stream A to be fed into the solid phase polymerisation reactor.

The solid phase polymerisation reactor R1 is loaded with low molecular weight polyester granules P (IV = 0.15 ÷ 0.75 dl/g), crystallised and at high temperature (temperature = 100 ÷ 150 °C) of at least a polyester.

The operative temperature of solid phase polymerisation reactors to which the reactive atmosphere is applied is lower of at least 50 °C, and preferably lower of at least 70 °C, than the process temperature, applied in the same plant and with the same polymer, without the reactive atmosphere. By way of example, if in a conventional existing plant, for instance in a moving bed vertical solid phase polymerisation reactor, a PET is processed, without using the reactive atmosphere, the temperature of the solid phase polymerisation reactor being of 210 °C, while by applying the reactive atmosphere according to the present invention, said temperature of the solid phase polymerisation reactor is decreased at least to 160 °C, and preferably at least to 140 °C.

The reactive gas stream A is fed into the reactor R1 and is made to flow into contact with the polyester granules P, thus allowing that diffusion phenomena of fluid F occur from outside each granule to inside thereof.

The feeding temperature of the reactive atmosphere A into the solid phase polymerisation reactor may be any of the temperatures comprised in the range between the operative temperature of the gas-liquid contactor C1 and the operative temperature of the solid phase polymerisation reactor; practically, it is convenient that the feeding temperature of the reactive atmosphere A into the solid phase polymerisation reactor is equal to the operative temperature, or little lower due to possible thermal wastes, of the gas-liquid contactor C1, so to avoid using an heater between the exit of the gas-liquid contactor and the feeding into the solid phase reactor. As far as the feeding pressure is concerned, it depends on the head losses that the reactive gas stream should overcome when passing through the solid phase polymerisation reactor; by way of example, in case the reactor is of the moving bed vertical type (wherein the overall head loss is due to gas flow through PET chips granules bed and through piping that the stream meets once it exits the reactor), the pressure will vary between + 150 mbar g. (for 100 tpd plants) and + 300 mbar g. (for 500 tpd plants), while in case the reactor is of the rotary inclined horizontal cylindrical reactor type (wherein the gas has not to pass through the PET granules bed), the pressure will vary between + 30 mbar g. and + 70 mbar g..

Once arrived inside the granule, preferably thanks to the carrying action of the carrying fluid V, the reactive substance A reacts with the polyester macromolecules through a mainly polyaddition mechanism, which has chemical reaction kinetics much more faster than those of the polycondensation mechanism, that lead to the increase of the average molecular weight and that occur among the single polyester molecules in inert atmosphere solid phase polymerisation processes; illustrative polyaddition reactions between the reactive substances and the reactive end terminals of polyester are shown in Scheirs, J. - Long, T. E., "Modern Polyester", John Wiley & Sons Ltd., 2004, Chapter 14, Paragraphs 2.1 (Di-anhydrides), 2.2 (Bis(oxoazolines)) e 2.3 (Di-epoxides).

Exactly to the purpose of facilitating the penetration of the reactive substance molecule inside the granules and, therefore, of avoiding that the reaction between said reactive substance and the polyester granules occurs only on the superficial layers of the granules contacted by the reactive gas stream, according to the present invention the reactive substance molecule is preferably not introduced as such into the gas stream that will contact the polyester granules, but it is diluted into a carrying fluid fitted to allow the aforesaid penetration.

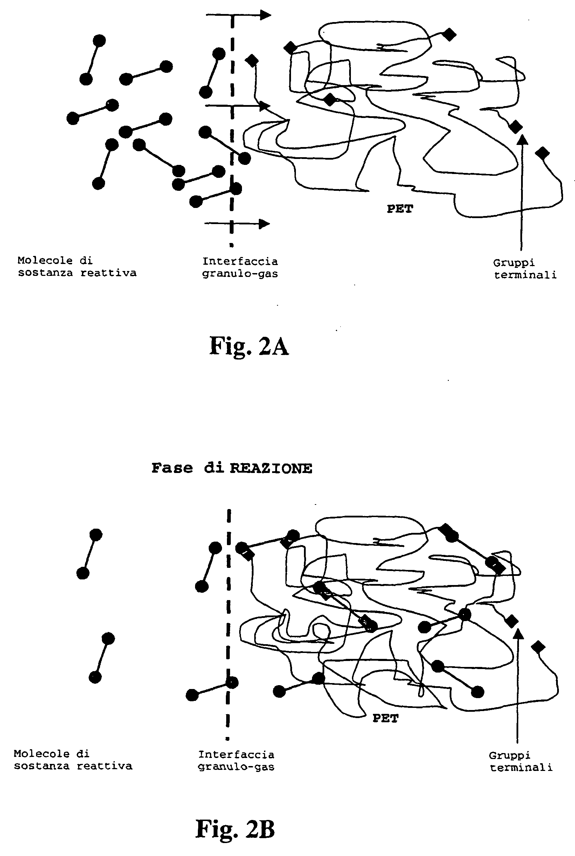

A schematic representation of, respectively, the diffusion and reaction phases described above is given in Figg. 2A and 2B.

The carrying fluid, which does not take part in the reaction and which does not stay bound to the polymeric matrix, thanks to its high volatility is evacuated off the granules during the following process steps and it is removed by oxidation and/or by adsorption and/or by cryocondensation and/or by washing ("scrubbing") in the gas purification unit present in any solid phase polymerisation plant.

From the applicative standpoint, the substantial process modification provided for according to the present invention may be implemented in all the plants designed, built and operated in accordance with any of the solid phase polymerisation processes nowadays commercially available; in particular, implementation of the present invention can easily take place both in new plants (that is to be designed and built from the beginning) and in existing plants (that is already built and operated in accordance with conventional technologies), through simple plant modifications.

From the realisation standpoint, always referring to Fig. 1, implementation of the present invention in an existing plant takes place through simple plant modifications, which substantially provide for introducing a gas-liquid contactor C1, for instance a bubble column, located downstream the heating device E1 for the purified inert gas stream to be sent to the solid phase polymerisation reactor R1; the mass transfer area between the phases and the contact time inside the contactor are suitably designed according to the unit operations rules so as to bring the fluid stream F content, preferably consisting of carrying fluid V and reactive substance R, in the purging inert gas stream G preferably up to the saturation point, before leaving the contactor itself. The reactive gas stream A is then fed into the solid phase polymerisation reactor R1, so as to allow that the solid phase polymerisation reaction in reactive atmosphere occurs, with all the resulting advantages.

The numerical simulations performed have shown that the use of a reactive gas stream, that is of the purging gas saturated of the mixture consisting of the carrying fluid and the reactive substance belonging to the previously cited categories, allows to decrease the reaction temperature from the range 200-230 °C of the current conventional processes to a range 100-150 °C, with consequential energy saving, reduced crystallisation requirements and reduced potential sticking problems.

Moreover, always according to the above-mentioned numerical simulations, the reaction time (at a reaction temperature in the range 100-150 °C) proves to be equal to about 1/3 of the reaction time required in the conventional processes, notwithstanding that the latters operate at a reaction temperature comprised in the range 200-230 °C.

With reference to the plant implementation of Fig. 1, one embodiment is hereinafter disclosed.

### Example

In this embodiment of the process according to the invention, experimental tests have been carried out on a laboratory-scale, cylindrical, vertical, discontinuous solid phase polymerisation reactor, with capacity equal to 40 kg of PET granules. Said reactor is stirred by a slow anchor stirrer (2-4 rpm) and is operated under gas stream.

For the experimental tests an amorphous PET has been used, having the following properties:

| **PROPERTIES** | **UNIT OF MEASUREMENT** | **VALUE** |
|---|---|---|
| IV | dl/g | 0.595 |
| -COOH | Eq/T | 31.0 |
| Colour | L/a/b cryst. | 66.6/-2.6/-5.6 |
| | L/a/b "as such" | 33.2/-2.2/-2.0 |
| Granules size | average mg | 19.7 |
| | std. dev. mg | 1.8 |
| Melting point | °C | 247 |
| DEG | % | 1.83 |
| IPA | % | 2.09 |
| Free AA | ppm | 100 |
| Metals | ppm Co | 36.5 |
| | ppm P | 30 |
| | ppm Sb | 255 |

where:
- "-COOH" represents the carboxylic end-groups content in the PET polymeric matrix;
- "L/a/b" represents the three colour components analysable by colorimeter: L = blue tendency, a = red tendency, b = yellow tendency;
- "cryst." and "as such" refer to colour analysis carried out, respectively, on crystallised and non crystallised sample;
- "average mg" (with respect to the granules size) represents the average weight of the single granule, obtained by calculating the arithmetical average of the weight of 50 different single granules randomly chosen;
- " std. dev. mg " (with respect to the granules size) represents the standard deviation of the set of measurements carried out;
- DEG (Di-Ethylene Glycol) and IPA (Iso-Phtalic Acid) are the co-monomers that are used for producing bottle-grade PET, whose content in the composition is analysed to characterised the same;
- "Co" (Cobalt) is the colour modifying metal;
- "P" (Phosphorus) is the stabilising metal;
- "Sb" (Antimony) is the polymerisation catalyst metal.

A first set of tests has been carried out by simulating the process conditions of a conventional type process:
- temperature of the reactor thermostatised in diathermic oil bath = 205 °C,
- inert gas stream: 100% nitrogen with cryogenic purity,
- inert gas stream temperature = 205 °C.

A second set of tests has been carried out by simulating the process conditions of a process occurring in reactive atmosphere, according to the present invention:
- temperature of the reactor thermostatised in diathermic oil bath = 130 °C,
- reactive gas stream: nitrogen with cryogenic purity saturated at 70 °C with a mixture containing 90% by weight of mixed xylenes (carrying fluid) and 10% by weight of hexamethylen-di-isocyanate (reactive substance),
- reactive gas temperature = 70 °C.

The IV increase depending on time has then been measured; the results are quoted in the following table:

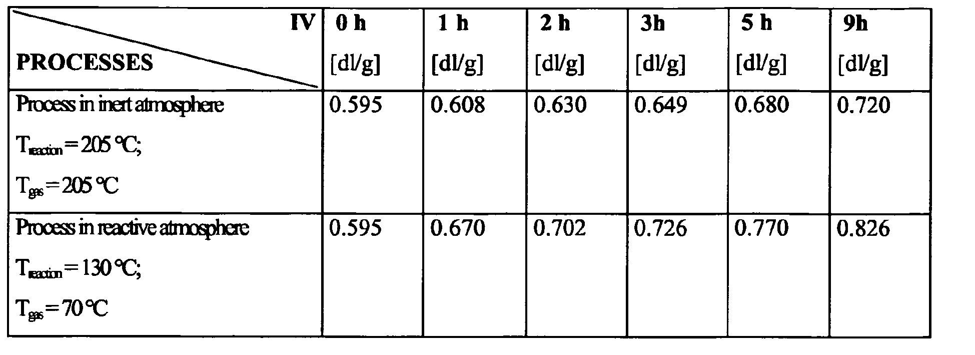

From the above disclosure, it clearly comes out that the method according to the invention, with respect to the conventional processes operating in inert atmosphere, allows:
- to achieve an higher increase of polyester molecular weight;
- to achieve an higher increase of polyester molecular weight per time unit;
- to operate at considerably lower temperatures/thermal levels.

The invention will be further advantageously applicable to any polyester that can be solid phase polymerised. The most common polyesters suitable for use in the present invention have at least about 75 mole percent of their acid moieties consisting of an aromatic dicarboxylic acid, such as terephthalic acid, isophthalic acid, or a naphthalenic dicarboxylic acid (preferably 2,6-) with the diol moieties consisting of glycols such as ethylene glycol, butylene glycol, 1,4-dimethylol cyclohexane and the like or aromatic diols such as hydroquinone and catechol. Said polyesters can contain other dicarboxylic acids such as adipic acid, isophthalic acid, sebacic acid, and the like. Polyethylene terephthalate, polyethylene isophthalate, polyethylene naphthalate, and polybutylene terephthalate homopolymers are representative examples of such polyesters.

Blends of various polyesters can also be solid phase polymerised in the process according to the invention. The polyester pre-polymers (amorphous starting polyesters) utilised in this invention can be made in any manner but are typically prepared by conventional melt phase polymerisation techniques. These polyester pre-polymers have an initial starting IV of at least about 0.2 dl/g as measured in a 60:40 (by weight): phenol ÷ 1,1,2,2,-tetrachloroethane solvent system at a temperature of 30 °C. The rate at which polyethylene terephthalate pre-polymer can be solid state polymerised also depends on the carboxyl end group (i.e.-COOH) content of the pre-polymer. Generally, pre-polymers having a carboxyl end group content within the range of about 18% to about 40% achieve maximum solid state polymerisation rates. It is preferred for such pre-polymers to have a carboxyl end group content within the range of about 24% to 33% (see for example US 4,238,593). Suitable polyester pre-polymers which can be solid state polymerised using my invention are comprised of one or more diacid components and one or more diol components. The diacid component in the polyesters are normally alkyl dicarboxylic acids which contain from 4 to 36 carbon atoms, diesters of alkyl dicarboxylic acids which contain from 6 to 38 carbon atoms, aryl dicarboxylic acids which contain from 8 to 20 carbon atoms, diesters of aryl dicarboxylic acids which contain from 10 to 2.2 carbon atoms, alkyl substituted aryl dicarboxylic acids which contain from 9 to 22 carbon atoms, or diesters of alkyl substituted aryl dicarboxylic acids which contain from 11 to 22 carbon atoms. The preferred alkyl dicarboxylic acids will contain from 4 to 12 carbon atoms. Some representative examples of such alkyl dicarboxylic acids include glutaric acid, adipic acid, pimelic acid, and the like. The preferred diesters of alkyl dicarboxylic acids will contain from 6 to 12 carbon atoms. A representative example of such a diester of an alkyl dicarboxylic acid is azelaic acid. The preferred aryl dicarboxylic acids contain from 8 to 16 carbon atoms. Some representative examples of aryl dicarboxylic acids are terephthalic acid, isophthalic acid, and orthophthalic acid. The preferred diesters of aryl dicarboxylic acids contain from 10 to 18 carbon atoms. Some representative examples of diesters of aryl dicarboxylic acids include diethyl terephthalate, diethyl isophthalate, diethyl orthophthalate, dimethyl naphthalate, diethyl naphthalate and the like. The preferred alkyl substituted aryl dicarboxylic acids contain from 9 to 16 carbon atoms and the preferred diesters of alkyl substituted aryl dicarboxylic acids contain from 11 to 15 carbon atoms.

The diol component of the polyester pre-polymers is normally comprised of glycols containing from 2 to 12 carbon atoms, glycol ethers containing from 4 to 12 carbon atoms, and polyether glycols having the structural formula HO-(A-O)n-H wherein A is an alkylene group containing from 2 to 6 carbon atoms and wherein n is an integer from 2 to 400. Generally, such polyether glycols will have a molecular weight of 400 to about 4000. Preferred glycols normally contain from 2 to 8 carbon atoms and more preferably from 4 to 8 carbon atoms. Some representative examples of glycols that can be utilised as the diol component include ethylene glycol, 1,3-propylene glycol, 1,2-propylene glycol, 2,2-diethyl-1,3-propane diol, 2,2-dimethyl-1,3-propane diol, 2-butyl-1,3-propane diol, 2-ethyl-2-isobutyl-1,3-propane diol, 1,3-butane diol, 1,4-butane diol, 1,5-pentane diol, 1,6-hexane diol, 2,2,4-trimethyl-1,6-hexane diol, 1,3-cyclohexane dimethanol, 1,4-cyclohexane dimethanol, and 2,2,4,4-tetramethyl-1,3-cyclobutane diol. Some representative examples of polyether glycols that can be used include polytetramethylene glycol and polyethylene glycol.

Branched polyester pre-polymers can also be solid state polymerised in the process of the present invention. Such branched polyesters normally contain branching agents which have three or more functional groups and preferably three or four functional groups. Reactive functional groups can be carboxyl groups or aliphatic hydroxyl groups. The branching agent utilised in such branched polyesters can optionally contain both carboxyl groups and hydroxyl groups. Examples of acidic branching agents include trimesic acid, trimellitic acid, pyromellitic acid, butane tetracarboxylic acid, naphthalene tricarboxylic acids, and cyclohexane-1,3,5-tricarboxylic acids. Some representative examples of hydroxyl branching agents (polyols) include glycerin, trimethylol propane, pentaerythritol, dipentaerythritol, 1,2,6-hexane triol, and 1,3,5-trimethylol benzene. Generally, from 0 to 3 percent of a polyol containing from 3 to 12 carbon atoms will be used as the branching agent (based upon the total diol component).

High strength polyesters which utilise at least one bis-hydroxyalkyl pyromellitic diimide in their diol component can also be solid state polymerised. The diol component in these polyesters will normally contain from 5 to 50 mole percent of one or more bis-hydroxyallcyl pyromellitic diimides and will preferably be comprised of from 10 to 25 mole percent of at least one bis-hydroxyalkyl pyromellitic diimide. The remaining portion of the diol component is comprised of additional copolymerisable diols.

## Claims

1. A process for the continuous and/or discontinuous solid phase polymerisation of polyester in order to increase its molecular weight, comprising the steps of
- providing a mass of low molecular weight polyester granules (P), crystallised and at high temperature, of at least a polyester;
- providing a substance, or a mixture of substances, (R) reactive with respect to said at least a polyester, said substance, or mixture of reactive substances, (R) being selected from the category of the molecules having reactive groups or reactive end-groups with respect to the constitutive groups of the macromolecules forming said at least a polyester, said reactive groups or reactive end-groups being at least in the number of two for each molecule of reactive substance (R), whereby the reactive substance, or mixture of reactive substances, (R) acts as chain extension units, or chain extenders, to achieve higher, and/or faster, and/or at a lower temperature, polymerisation degree (i.e. IV values) increase;
- introducing said granules (P) into a reactor (R1) of the static type or of the moving bed type or of the fluidised bed type or of the stirred bed type, having a substantially cylindrical or parallelepipedal shape, vertical or horizontal;
- preparing a fluid stream (F) preferably by diluting the reactive substance, or the mixture of reactive substances, (R) in a carrying fluid or "carrier" (V), said carrying fluid (V) having high volatility and high diffusion coefficient in the polyester;
- providing a purging inert gas stream (G) purified and heated inside a suitable device (E1), preferably inside a heat exchanger, up to a temperature lower than the boiling point of the fluid stream (F), that is lower than the boiling point of the carrying fluid (V) and/or the reactive substance (R) forming said fluid stream (F);
- feeding the fluid stream (F) and the hot purging inert gas stream (G) in counter-current flow or in co-current flow into a gas-liquid contactor (C1), wherein the creation of contact area between the phases and the residence time allow to reach up to preferably saturate said hot purging inert gas stream (G) with said fluid stream (F), thus originating a reactive gas stream or reactive atmosphere or gaseous composition (A), said gas-liquid contactor (C1) operating at a temperature lower than the boiling point of the fluid stream (F), that is lower than the boiling point of the carrying fluid (V) and/or of the boiling point of the reactive substance or mixture of reactive substances (R), which are the constituents of the fluid stream (F) itself;
- feeding the reactive gas stream (A) into the reactor (R1) and make it flow in contact with the polyester granules (P), thus allowing that diffusion phenomena of fluid stream (F) occur from outside each granule to inside thereof;
- letting that, once arrived inside the granule, preferably thanks to the carrying action of the carrying fluid (V), the reactive substance or mixture of reactive substances (R) reacts with the polyester macromolecules through a mainly polyaddition mechanism, thus causing an intrinsic viscosity (IV) increase of said at least one polyester.

2. A process according to claim 1, wherein the fluid stream (F) being fed into the gas-liquid contactor (C1) is in the liquid phase.

3. A process according to claim 1 or 2, wherein the considered reactive substances, taken singly and/or in mixture, belong to the categories of the di-epoxides, di-anhydrides, di-isocyanates, bis(oxoazolines), bis(di-hydro-oxoazines).

4. A process according to any claim from 1 to 3, wherein the carrying fluid (V), within which is preferably diluted the reactive substance (R) to generate the reactive atmosphere (A), is paraxylene or mixed xylenes.

5. A process according to claim 1, wherein the purging inert gas stream (G) is heated at a temperature lower than the boiling starting temperature of the fluid stream (F), preferably at a temperature lower of at least 20 °C than the boiling starting temperature of the fluid stream (F), before being fed to the gas-liquid contactor (C1), which generates the reactive atmosphere (A) to be sent to the reactor (R1).

6. A process according to any claim from 1 to 5, wherein said purging inert gas is an inert gas or air, preferably a mixture of gases chosen from the group comprising nitrogen, noble gases, carbon dioxide, carbon monoxide and oxygen and wherein the oxygen content is < 10% by weight, or air with a dew point < - 30°C.

7. A process according to any claim from 1 to 6, wherein said polyester granules (P) introduced inside said reactor (R1) have a temperature comprised in the range 100-175 °C, preferably a temperature comprised in the range 100-150 °C.

8. A process according to any claim from 1 to 7, wherein said polyester is polyethylene terephthalate or PET.

9. A process according to claim 8, wherein said polyethylene terephthalate or PET has an IPA (Isophtalic Acid) content comprised in the range 1÷20%.

10. A process according to claim 8 or 9, wherein said granules of polyethylene terephthalate (P) introduced inside said reactor (R1) have an intrinsic viscosity comprised in the range between 0.15 and 0.75 dl/g, preferably an intrinsic viscosity comprised in the range between 0.55 and 0.65 dl/g.

11. A process according to any claim from 1 to 7, wherein said polyester is polyethylene naphthalate or PEN.

12. A process according to any claim from 1 to 7, wherein said polyester is polybutylene terephthalate or PBT.

13. A process according to any claim from 1 to 12, wherein said granules (P) are spherical and have a diameter comprised between 0.5 mm and 5 mm.

14. A process according to any claim from 1 to 12, wherein said granules (P) are extended cylinders with length < 10 mm and circular or square cross-section having, respectively, diameter and side < 5 mm.

15. A process according to any claim from 1 to 12, wherein said polyester granules (P) are platelets with diameter > 2 mm and thickness < 2 mm.

16. A process according to any claim from 1 to 12, wherein said polyester granules (P) have an irregular shape with a volume comprised between 1 and 125 mm³.

17. A process according to any claim from 1 to 16, wherein the intrinsic viscosity (IV) of the polyester is increased of at least 0.05 dl/g, preferably of at least 0.35 dl/g, during the solid phase polymerisation.

18. A plant for carrying out the process of any claim from 1 to 17, comprising:
- a reactor (R1) provided with a feeding opening (B) to feed the low molecular weight polyester granules (P) into said reactor (R1), a feeding line (2) to feed a gaseous stream into said reactor (R1) and a discharge opening (S) to discharge the polymerised product;
- a circuit (C) connected to the reactor (R1) for purifying gas and recovering polyester particles through a suitable separator;
- an heating system (E1) for the purging inert gas stream;
- a liquid-liquid contactor for mixing a reactive substance, or a mixture of reactive substances, (R) and a carrying fluid or "carrier" (V) thus obtaining a fluid stream (F), said liquid-liquid contactor being located upstream said reactor (R1);
a gas-liquid contactor (C1) located immediately upstream said reactor (R1), between the heating system (E1) and the reactor (R1), provided with a first feeding line (1) to feed into said gas-liquid contactor (C1) said fluid stream (F), a second feeding line (3) to feed into said gas-liquid contactor (C1) a purging inert gas stream (G) purified and heated inside said heating system (E1) and a line (2) to discharge a reactive gas stream (A), said reactive gas stream (A) having been preferably produced by saturation inside the gas-liquid contactor (C1) of the purging inert gas stream (G) with the fluid stream (F) containing the reactive substance, or the mixture of reactive substances, said reactive substance, or mixture of reactive substances, (R), being selected from the category of the molecules having reactive groups or reactive end-groups with respect to the constitutive groups of the macromolecules forming polyesters, said reactive groups or reactive end-groups being at least in the number of two for each molecule of reactive substance (R), whereby the reactive substance, or mixture of reactive substances, (R) acts as chain extension units, or chain extenders, to achieve higher, and/or faster, and/or at a lower temperature, polymerisation degree (i.e. IV values) increase, and said fluid stream (F) being incorporated within said purging inert gas (G).

19. A plant according to claim 18, wherein the gas-liquid contactor (C1), within which the reactive atmosphere (A) is produced, is of any type and, preferably, is a bubble column, a plates column, a Venturi washing device ("Venturi scrubber"), a gas-liquid static mixer or a spray tower.

20. A plant according to claim 18 or 19, wherein the reactor (R1) is a reactor of the static type or of the moving bed type or of the fluidised bed type or of the stirred bed type, having a substantially cylindrical or parallelepipedal shape, vertical or horizontal.

21. A plant according to claim 18, wherein a crystalliser is located upstream said reactor (R1).

22. A plant according to claim 18 or 19, wherein said reactor (R1) is rotary and slightly inclined.

23. Use of a reactive atmosphere or gaseous composition (A) in a process according to any claim from 1 to 17, said reactive atmosphere (A) comprising the following constituents:
- at least a reactive substance, or a mixture of reactive substances, (R) forming a fluid stream (F), and
- a purging inert gas, or a mixture of gases, (G) purified and heated,
said reactive substance, or mixture of reactive substances, (R), being selected from the category of the molecules having reactive groups or reactive end-groups with respect to the constitutive groups of the macromolecules forming polyesters, said reactive groups or reactive end-groups being at least in the number of two for each molecule of reactive substance (R), whereby the reactive substance, or mixture of reactive substances, (R) acts as chain extension units, or chain extenders, to achieve higher, and/or faster, and/or at a lower temperature, polymerisation degree (i.e. IV values) increase, and said fluid stream (F) being incorporated within said purging inert gas (G).

24. Use according to claim 23, wherein the reactive substance, or the mixture of reactive substances, (R) is diluted in a carrying fluid (V).

25. Use according to claim 23 or 24, wherein said purging inert gas (G) is saturated of said fluid stream (F).

26. Use according to any claim from 23 to 25, wherein the considered reactive substances (R), taken singly and/or in mixture, belong to the categories of the di-epoxides, di-anhydrides, di-isocyanates, bis(oxoazolines), bis(di-hydro-oxoazines).

27. Use according to claim 24 or 25, wherein said carrying fluid (V) is a fluid having high volatility and high diffusion coefficient in the polyester, preferably paraxylene or mixed xylenes.

## Patentansprüche

1. Verfahren zur kontinuierlichen und/oder diskontinuierlichen Festphasenpolymerisation von Polyester zur Erhöhung von dessen Molekulargewicht, mit den folgenden Schritten:
- Bereitstellen einer bei einer hohen Temperatur kristallisierten Polyestergranulatmenge niedrigen Molekulargewichts aus mindestens einem Polyester,
- Bereitstellen einer Substanz oder einer Mischung von Substanzen (R), die mit dem mindestens einen Polyester reaktionsfähig ist, wobei die Substanz oder Mischung von Substanzen (R) aus der Klasse von Molekülen ausgewählt wurde, die reaktionsfähige Gruppen oder reaktionsfähige Endgruppen in Bezug auf die konstitutiven Gruppen der Makromoleküle, die das mindestens eine Polyester bilden, haben, wobei die Moleküle der reaktionsfähigen Substanz (R) jeweils mindestens zwei reaktionsfähige Gruppen oder Endgruppen haben, und wobei die reaktionsfähige Substanz oder Mischung reaktionsfähiger Substanzen (R) als Kettenverlängerungseinheiten oder Kettenverlängerungen wirkt, um einen größeren und/oder schnelleren Anstieg des Polymerisationsgrades und/oder bei einer niedrigeren Temperatur einen Anstieg des Polymerisationsgrads (d. h. IV Wert) zu erzielen;
- Einbringen des Granulats (P) in einen Reaktor (R1) des statischen Typs oder des bewegten Betttyps oder des Fließbetttyps oder des gerührten Betttyps, wobei der Reaktor eine im wesentlichen zylindrische oder parallelepipedale Gestalt, vertikal oder horizontal, aufweist,
- Herstellen eines Fluidstroms (F), vorzugsweise durch Verdünnen der reaktionsfähigen Substanz oder der Mischung reaktionsfähiger Substanzen (R) in einem tragenden Fluid oder "Träger" (V), wobei das tragende Fluid (V) eine große Beweglichkeit und einen großen Diffusionskoeffizienten in dem Polyester hat;
- Erzeugen eines spülenden Inertgasstroms (G), der in einem geeigneten Gerät (E1), vorzugsweise einem Wärmetauscher, gereinigt und auf eine Temperatur unterhalb des Siedepunkts des Fluidstroms (F) aufgeheizt wurde, also unterhalb des Siedepunkts des tragenden Fluids (V) und/oder der reaktionsfähigen Substanz (R), welche den Fluidstrom (F) bilden;
- Einleiten des Fluidstroms (F) und des heißen spülenden Inertgasstroms (G) in entgegengesetzter oder gleicher Strömungsrichtung in einen Gas-Flüssigkeitskontaktor (C1), in dem die Erzeugung einer Kontaktfläche zwischen den Phasen und die Verweildauer es ermöglichen, dass sich der heiße spülende Inertgasstrom, vorzugsweise bis zur Sättigung, in dem Fluidstrom (F) erstreckt, so dass ein reaktionsfähiger Gasstrom oder eine reaktionsfähige Atmosphäre oder gasförmige Zusammensetzung (A) entsteht, wobei der Gas-Flüssigkeitskontaktor (C1) bei einer Temperatur arbeitet, die unter dem Siedepunkt des Fluidstroms (F) liegt, also niedriger ist, als der Siedepunkt des tragenden Fluids (V) und/oder des Siedepunkts der reaktionsfähigen Substanz oder Mischung reaktionsfähiger Substanzen (R), welche die Bestandteile des Fluidstroms (F) sind;
- Einleiten des reaktionsfähigen Gasstroms (A) in den Reaktor (R1), so dass er in Kontakt mit dem Polyestergranulat (P) strömt und auf diese Weise ermöglicht, dass Diffusionserscheinungen des Fluidstroms (F) von der Außenseite jedes Granulatkorns zu einem Inneren auftreten;
- Zulassen, dass die reaktionsfähige Substanz oder Mischung reaktiver Substanzen (R), nachdem sie im Inneren der Granulatkörner, vorzugsweise wegen der tragenden Wirkung des tragenden Fluids (V), angekommen ist, mit den Polyestermakromolekülen im wesentlichen durch einen Polyadditionsmechanismus reagiert, so dass eine Erhöhung der intrinsischen Viskosität (IV) des mindestens einen Polyesters bewirkt wird.

2. Verfahren nach Anspruch 1, wobei der Fluidstrom (F), der in den Gasflüssigkeitskontaktierer (C1) eingeleitet wird, in der flüssigen Phase vorliegt.

3. Verfahren nach Anspruch 1 oder 2, wobei die betrachteten reaktionsfähigen Substanzen, die einzeln und/oder als Mischung verwendet werden, in die Kategorien der Di-Epoxide, Di-Anhydride, Di-Isocyanate, Bis(oxoazoine), Bis(Di-Hydrooxoazine) gehören.

4. Verfahren nach einem der Ansprüche 1 bis 3, wobei das tragende Fluid (V), in dem vorzugsweise die reaktionsfähige Substanz (R) verdünnt wird, um die reaktionsfähige Atmosphäre (A) zu erzeugen, Paraxylen oder eine Mischung aus Xylenen ist.

5. Verfahren nach Anspruch 1, wobei der reinigende Inertgasstrom (G) auf eine Temperatur aufgeheizt wird, die niedriger als die Temperatur ist, bei welcher der Fluidstrom (F) zu sieden beginnt, vorzugsweise auf eine Temperatur, die wenigstens 20°C niedriger als die Temperatur ist, bei welcher der Fluidstrom (F) zu sieden beginnt, bevor er in den Gasflüssigkeitskontaktierer (C1) eingeleitet wird, was die reaktive Atmosphäre (A) erzeugt, die in den Reaktor (R1) eingeleitet wird.

6. Verfahren nach einem der Ansprüche 1 bis 5, wobei der spülende Inertgasstrom ein inertes Gas oder Luft ist, vorzugsweise eine Mischung aus Gasen, die aus der Gruppe umfassend Stickstoff, Edelgase, Kohlendioxid, Kohlenmonoxid und Sauerstoff gewählt wurden, und wobei der Sauerstoffgehalt weniger als 10 Gewichtsprozent ist, oder Luft mit einem Taupunkt unterhalb von -30°C.

7. Verfahren nach einem der Ansprüche 1 bis 6, wobei das in den Reaktor (R1) eingeleitete Polyestergranulat (P) eine Temperatur im Bereich von 100-175°C, vorzugsweise eine Temperatur im Bereich von 100-150°C, hat.

8. Verfahren nach einem der Ansprüche 1 bis 7, wobei das Polyester Polyethylenterephthalat oder PET ist.

9. Verfahren nach Anspruch 8, wobei das Polyethylenterephthalat oder PET einen IPS(Isophalsäure)-Anteil im Bereich von 1 % bis 20 % aufweist.

10. Verfahren nach Anspruch 8 oder 9, wobei das in den Reaktor (R1) eingeleitete Polyethylenterterephthalat-Granulat (P) eine intrinsische Viskosität im Bereich zwischen 0,15 und 0,75 dl/g, vorzugsweise eine intrinsische Viskosität im Bereich zwischen 0,55 und 0,65 dl/g, hat.

11. Verfahren nach einem der Ansprüche 1 bis 7, wobei der Polyester Polyethylennaphthalat oder PEN ist.

12. Verfahren nach einem der Ansprüche 1 bis 7, wobei das Polyester Polybutylenterephthalat oder PBT ist.

13. Verfahren nach einem der Ansprüche 1 bis 12, wobei die Granulatkörner (P) sphärisch sind und einen Durchmesser zwischen 0,5 mm und 5 mm haben.

14. Verfahren nach einem der Ansprüche 1 bis 12, wobei die Granulatkörner ausgedehnte Zylinder mit einer Länge von weniger als 10 mm und kreisförmigem oder viereckigem Querschnitt sind, die einen Durchmesser bzw. eine Seitenlänge von weniger als 5 mm haben.

15. Verfahren nach einem der Ansprüche 1 bis 12, wobei die Polyestergranulatkörner (P) Plättchen mit einem Durchmesser von mehr als 2 mm und einer Dicke von weniger als 2 mm sind.

16. Verfahren nach einem der Ansprüche 1 bis 12, wobei die Polyestergranulatkörner (P) eine unregelmäßige Form mit einem Volumen zwischen 1 mm³ und 125 mm³ haben.

17. Verfahren nach einem der Ansprüche 1 bis 16, wobei die intrinsische Viskosität (IV) des Polyesters um mindestens 0,05 dl/g, vorzugsweise um mindestens 0,35 dl/g, bei der Festphasenpolymerisation erhöht wird.

18. Anlage zum Durchführen des Verfahrens nach einem der Ansprüche 1 bis 17, mit:
- einem Reaktor (R1), der eine Einlassöffnung (B) zum Einleiten des Polyestergranulats (P) niedrigen Molekulargewichts in den Reaktor (R1), eine Zuführleitung (2) zum Einleiten eines gasförmigen Stroms in den Reaktor (R1 und eine Auslassöffnung (S) zum Abführen des polymerisierten Produkts aufweist;
- einen an den Reaktor (R1) angeschlossenen Kreislauf (C), um Gas zu reinigen und Polyesterpartikel über einen geeigneten Separator wiederzugewinnen;
- ein Heizsystem (E1) für den spülenden Inertgasstrom;
- ein Flüssigkeits-Flüssigkeitskontaktor zum Mischen einer reaktionsfähigen Substanz oder einer Mischung reaktionsfähiger Substanzen (R) mit einem tragenden Fluid oder "Träger" (V), um auf diese Weise einen Fluidstrom (F) zu erzeugen,
wobei der Flüssigkeits-Flüssigkeitskontaktor dem Reaktor (R1) vorgelagert ist;
- einen Gas-Flüssigkeitskontaktor (C1), der dem Reaktor (R1) unmittelbar nachgelagert ist, zwischen dem Heizsystem (E1) und dem Reaktor (R1) angeordnet ist und eine erste Zuführleitung (1) zum Einleiten des Fluidstroms (F) in den Gas-Flüssigkeitskontaktor (C1), eine zweite Zuführleitung (3) zum Einleiten eines spülenden Inertgasstroms (G), der in dem Heizsystem (E1) gereinigt und aufgeheizt wurde, in den Gas-Flüssigkeitskontaktor (C1) und eine Leitung (2) zum Ableiten eines reaktionsfähigen Gasstroms (A) aufweist, wobei der reaktionsfähige Gasstrom (A) vorzugsweise in den Gas-Flüssigkeitskontaktor (C1) durch Sättigung des spülenden Inertgasstroms (G) mit dem Fluidstrom (F) erzeugt wurde, der die reaktive Substanz oder die Mischung reaktiver Substanzen enthält,
wobei die reaktionsfähige Substanz oder Mischung reaktionsfähiger Substanzen (R) aus der Klasse von Molekülen ausgewählt wurde, die reaktionsfähige Gruppen oder reaktionsfähige Endgruppen in Bezug auf die konstitutiven Gruppen der die Polyester bildenden Makromoleküle haben, wobei die Moleküle der reaktionsfähigen Substanz (R) jeweils mindestens zwei reaktionsfähige Gruppen oder reaktionsfähige Endgruppen haben, und wobei die reaktionsfähige Substanz oder Mischung reaktionsfähiger Substanzen (R) als Kettenverlängerungseinheiten oder Kettenverlängerungen wirkt, um einen größeren, und/oder schnelleren Anstieg des Polymerisationsgrades und/oder bei einer niedrigeren Temperatur einen Anstieg des Polymerisationsgrades (d. h. IV-Werte) zu erzielen, wobei der Fluidstrom (F) in den spülenden Inertgasstrom (G) inkorporiert ist.

19. Anlage gemäß Anspruch 18, in welcher der Gas-Flüssigkeitskontaktor (C1), mit dem die reaktionsfähige Atmosphäre (A) erzeugt wird, von beliebigem Typ ist und vorzugsweise eine Blasensäule, eine Plattensäule, eine Venturiwascheinrichtung ("Venturi-Schrubber"), ein statischer Gasflüssigkeitsmischer oder ein Sprühturm ist.

20. Anlage nach Anspruch 18 oder 19, in welcher der Reaktor (R1) ein Reaktor des statischen Typs oder des bewegten Betttyps oder des Fließbetttyps oder des gerührten Betttyps ist und eine im wesentlichen zylindrische oder parallelepipedale Gestalt, vertikal oder horizontal, hat.

21. Anlage nach Anspruch 18, in welcher dem Reaktor (R1) ein Kristalisator nachgelagert ist.

22. Anlage nach Anspruch 18 oder 19, in welcher der Reaktor (R1) drehbar und leicht geneigt ist.

23. Verwendung einer reaktionsfähigen Atmosphäre oder gasförmigen Zusammensetzung (A) in einem Verfahren nach einem der Ansprüche 1 bis 17, wobei die reaktionsfähige Atmosphäre (A) die folgenden Bestandteile aufweist:
- mindestens eine einen Fluidstrom (F) bildende reaktionsfähige Substanz oder eine Mischung reaktionsfähiger Substanzen (R), und
- ein gereinigtes und aufgeheiztes spülendes Inertgas oder eine Mischung von Gasen (G),
wobei die reaktionsfähige Substanz oder Mischung reaktionsfähiger Substanzen (R) aus der Klasse von Molekülen ausgewählt wurde, die reaktionsfähige Gruppen oder reaktionsfähige Endgruppen in Bezug auf die konstitutiven Gruppen der Polyester bildenden Makromoleküle haben, wobei die Moleküle der reaktionsfähigen Substanz (R) jeweils mindestens zwei reaktionsfähige Gruppen oder Endgruppen haben, und wobei die reaktionsfähige Substanz oder Mischung reaktionsfähiger Substanzen (R) als Kettenverlängerungseinheiten oder Kettenverlängerungen wirkt, um einen größeren und/oder schnelleren Anstieg des Polymerisationsgrades und/oder bei niedrigerer Temperatur einen Anstieg des Polymerisationsgrades (d. h. IV.-Werke) zu erzielen, und wobei der Fluidstrom (F) in das spülende Inertgas (G) inkorporiert ist.

24. Verwendung nach Anspruch 23, wobei die reaktionsfähige Substanz oder die Mischung reaktionsfähiger Substanzen (R) in einem tragenden Fluid (V) verdünnt ist.

25. Verwendung nach Anspruch 23 oder 24, wobei das spülende Inertgas (G) mit dem Fluidstrom (F) gesättigt ist.

26. Verwendung nach einem der Ansprüche 23 bis 25, wobei die betrachteten reaktionsfähigen Substanzen (R), die einzeln und/oder in Mischung verwendet werden, zur Klasse der Di-Epoxide, Di-Anhydride, Di-lsocyanate, Bis(Oxoazoline) oder Bis(Di-Hydro-Oxoazine) gehören.

27. Verwendung nach Anspruch 24 oder 25, wobei das tragende Fluid (V) ein Fluid ist, das eine große Beweglichkeit und einen großen Diffusionskoeffizienten in dem Polyester aufweist, vorzugsweise Paraxylen oder eine Xylenmischung ist.

## Revendications

1. Procédé pour la polymérisation en phase solide en continu et/ou en discontinu d'un polyester afin d'augmenter sa masse moléculaire, comprenant les étapes de :
- fourniture d'une masse de granulés de polyester de masse moléculaire faible (P), cristallisé et à haute température, d'au moins un polyester ;
- fourniture d'une substance, ou d'un mélange de substances, (R) réactif (réactive) par rapport audit au moins un polyester, ladite substance, ou ledit mélange de substances réactives, (R) étant choisi(e) dans la catégorie des molécules ayant des groupes réactifs ou des groupes terminaux réactifs par rapport aux groupes constitutifs des macromolécules formant ledit au moins un polyester, lesdits groupes réactifs ou groupes terminaux réactifs étant au moins au nombre de deux pour chaque molécule de substance réactive (R), si bien que la substance réactive, ou le mélange de substances réactives, (R) agit comme des motifs d'allongement de chaîne, ou allongeurs de chaîne, pour parvenir à une augmentation du degré de polymérisation (à savoir des valeurs IV) plus élevée, et/ou plus rapide, et/ou à une température plus basse ;
- introduction desdits granulés (P) dans un réacteur (R1) du type statique ou du type à lit mobile ou du type à lit fluidisé ou du type à lit agité, ayant une forme sensiblement cylindrique ou parallélépipédique, vertical ou horizontal ;
- préparation d'un courant de fluide (F) de préférence en diluant la substance réactive, ou le mélange de substances réactives, (R) dans un fluide de transport ou "porteur" (V), ledit fluide de transport (V) ayant une volatilité élevée et un coefficient de diffusion élevé dans le polyester ;
- fourniture d'un courant de gaz inerte de purge (G) purifié et chauffé à l'intérieur d'un dispositif approprié (E1), de préférence à l'intérieur d'un échangeur de chaleur, jusqu'à une température inférieure au point d'ébullition du courant de fluide (F), qui est inférieure au point d'ébullition du fluide de transport (V) et/ou de la substance réactive (R) formant ledit courant de fluide (F) ;
- alimentation en courant de fluide (F) et en courant de gaz inerte de purge chaud (G) dans un flux à contre-courant ou dans un flux parallèle d'un contacteur gaz-liquide (C1), où la création d'une zone de contact entre les phases et le temps de séjour permettent d'arriver jusqu'à saturer de préférence ledit courant de gaz inerte de purge chaud (G) avec ledit courant de fluide (F), donnant ainsi naissance à un courant de gaz réactif ou une atmosphère réactive ou une composition gazeuse (A), ledit contacteur gaz-liquide (C1) fonctionnant à une température inférieure au point d'ébullition du courant de fluide (F), qui est inférieure au point d'ébullition du fluide de transport (V) et/ou au point d'ébullition de la substance réactive ou du mélange de substances réactives (R), qui sont les constituants du courant de fluide (F) lui-même ;
- alimentation en courant de gaz réactif (A) du réacteur (R1) et faire qu'il s'écoule en contact avec les granulés de polyester (P), permettant ainsi que se produise un phénomène de diffusion de courant de fluide (F), de l'extérieur de chacun des granulés vers l'intérieur de ceux-ci ;
- permettre que, une fois arrivé à l'intérieur du granulé, de préférence grâce à l'action portante du fluide de transport (V), la substance réactive ou le mélange de substances réactives (R) réagisse avec les macromolécules de polyester par le biais d'un mécanisme de polyaddition essentiellement, entraînant ainsi une augmentation de la viscosité intrinsèque (IV) dudit au moins un polyester.

2. Procédé selon la revendication 1, dans lequel le courant de fluide (F) alimentant le contacteur gaz-liquide (C1) est en phase liquide.

3. Procédé selon la revendication 1 ou 2, dans lequel les substances réactives considérées prises seules et/ou en mélange, appartiennent aux catégories des di-époxydes, des di-anhydrides, des di-isocyanates, des bis(oxoazolines), des bis(di-hydro-oxoazines).

4. Procédé selon l'une quelconque des revendications 1 à 3, dans lequel le fluide de transport (V), dans lequel la substance réactive (R) est de préférence diluée pour générer l'atmosphère réactive (A), est un paraxylène ou des xylènes mélangés.

5. Procédé selon la revendication 1, dans lequel le courant de gaz inerte de purge (G) est chauffé à une température inférieure à la température de début d'ébullition du courant de fluide (F), de préférence à une température inférieure d'au moins 20°C à la température de début d'ébullition du courant de fluide (F), avant d'être introduit dans le contacteur gaz-liquide (C1), qui génère l'atmosphère réactive (A) devant être envoyée au réacteur (R1) .

6. Procédé selon l'une quelconque des revendications 1 à 5, dans lequel ledit gaz inerte de purge est un gaz inerte ou de l'air, de préférence un mélange de gaz choisis dans le groupe comprenant de l'azote, des gaz nobles, du dioxyde de carbone, du monoxyde de carbone et de l'oxygène et dans lequel la teneur en oxygène est <10 % en poids, ou de l'air avec un point de rosée <-30°C.

7. Procédé selon l'une quelconque des revendications 1 à 6, dans lequel lesdits granulés de polyester (P) introduits à l'intérieur dudit réacteur (R1) ont une température comprise dans la gamme de 100°C à 175°C, de préférence une température comprise dans la gamme de 100°C à 150°C.

8. Procédé selon l'une quelconque des revendications 1 à 7, dans lequel ledit polyester est du poly(téréphtalate d'éthylène) ou PET.

9. Procédé selon la revendication 8, dans lequel ledit poly(téréphtalate d'éthylène) ou PET a une teneur en IPA (acide isophtalique) comprise dans la gamme de 1÷20 %.

10. Procédé selon la revendication 8 ou 9, dans lequel lesdits granulés de poly(téréphtalate d'éthylène) (P) introduits à l'intérieur dudit réacteur (R1) ont une viscosité intrinsèque dans la gamme comprise entre 0,15 et 0,75 dl/g, de préférence une viscosité intrinsèque dans la gamme comprise entre 0,55 et 0,65 dl/g.

11. Procédé selon l'une quelconque des revendications 1 à 7, dans lequel ledit polyester est du poly(naphtalate d'éthylène) ou PEN.

12. Procédé selon l'une quelconque des revendications 1 à 7, dans lequel ledit polyester est du poly(téréphtalate de butylène) ou PBT.

13. Procédé selon l'une quelconque des revendications 1 à 12, dans lequel lesdits granulés (P) sont sphériques et ont un diamètre compris entre 0,5 mm et 5 mm.

14. Procédé selon l'une quelconque des revendications 1 à 12, dans lequel lesdits granulés (P) sont des cylindres allongés avec une longueur < 10 mm et une coupe droite circulaire ou carrée ayant, respectivement, un diamètre et un côté < 5 mm.

15. Procédé selon l'une quelconque des revendications 1 à 12, dans lequel lesdits granulés de polyester (P) sont des plaquettes avec un diamètre > 2 mm et une épaisseur < 2 mm.

16. Procédé selon l'une quelconque des revendications 1 à 12, dans lequel lesdits granulés de polyester (P) ont une forme irrégulière avec un volume compris entre 1 et 125 mm³.

17. Procédé selon l'une quelconque des revendications 1 à 16, dans lequel la viscosité intrinsèque (IV) du polyester est augmentée d'au moins 0,05 dl/g, de préférence d'au moins 0,35 dl/g, pendant la polymérisation en phase solide.

18. Installation destinée à réaliser le procédé selon l'une quelconque des revendications 1 à 17, comprenant :
- un réacteur (R1) muni d'une ouverture d'alimentation (B) pour alimenter en granulés de polyester de masse moléculaire faible (P) ledit réacteur (R1), une canalisation d'alimentation (2) pour alimenter en courant gazeux ledit réacteur (R1) et une ouverture de décharge (S) pour décharger le produit polymérisé ;
- un circuit (C) connecté au réacteur (R1) destiné à purifier le gaz et à récupérer les particules de polyester par l'intermédiaire d'un séparateur approprié ;
- un système de chauffage (E1) pour le courant de gaz inerte de purge ;
- un contacteur liquide-liquide destiné à mélanger une substance réactive, ou un mélange de substances réactives, (R) et un fluide de transport ou "porteur" (V), obtenant ainsi un courant de fluide (F), ledit contacteur liquide-liquide étant situé en amont dudit réacteur (R1) ;
- un contacteur gaz-liquide (C1) situé immédiatement en amont dudit réacteur (R1), entre le système de chauffage (E1) et le réacteur (R1), équipé d'une première canalisation d'alimentation (1) pour alimenter ledit contacteur gaz-liquide (C1) en dit courant de fluide (F), une seconde canalisation d'alimentation (3) pour alimenter ledit contacteur gaz-liquide (C1) en un courant de gaz inerte de purge (G) purifié et chauffé à l'intérieur dudit système de chauffage (E1) et une canalisation (2) pour décharger un courant de gaz réactif (A), ledit courant de gaz réactif (A) ayant de préférence été produit par saturation à l'intérieur du contacteur gaz-liquide (C1) du courant de gaz inerte de purge (G) avec le courant de fluide (F) contenant la substance réactive, ou le mélange de substances réactives, ladite substance réactive, ou ledit mélange de substances réactives, (R), étant choisi(e) dans la catégorie des molécules ayant des groupes réactifs ou des groupes terminaux réactifs par rapport aux groupes constitutifs des macromolécules formant les polyesters, lesdits groupes réactifs ou groupes terminaux réactifs étant au moins au nombre de deux pour chaque molécule de substance réactive (R), si bien que la substance réactive, ou le mélange de substances réactives, (R) agit comme des motifs d'allongement de chaîne, ou allongeurs de chaîne, pour parvenir à une augmentation du degré de polymérisation (à savoir des valeurs IV) plus élevée, et/ou plus rapide, et/ou à une température plus basse, et ledit courant de fluide (F) étant incorporé dans ledit gaz inerte de purge (G).

19. Installation selon la revendication 18, dans laquelle le contacteur gaz-liquide (C1), dans lequel l'atmosphère réactive (A) est produite, est de tout type et, de préférence, est une colonne à bulles, une colonne à plateaux, un dispositif de lavage Venturi ("*Venturi scrubber*"), un mélangeur statique gaz-liquide ou une tour de pulvérisation.

20. Installation selon la revendication 18 ou 19, dans laquelle le réacteur (R1) est un réacteur du type statique ou du type à lit mobile ou du type à lit fluidisé ou du type à lit agité, ayant une forme sensiblement cylindrique ou parallélépipédique, vertical ou horizontal.

21. Installation selon la revendication 18, dans laquelle un cristalliseur est situé en amont dudit réacteur (R1).

22. Installation selon la revendication 18 ou 19, dans laquelle ledit réacteur (R1) est rotatif et légèrement incliné.

23. Utilisation d'une atmosphère réactive ou d'une composition gazeuse (A) dans un procédé selon l'une quelconque des revendications 1 à 17, ladite atmosphère réactive (A) comprenant les constituants suivants :
- au moins une substance réactive, ou un mélange de substances réactives, (R) formant un courant de fluide (F), et
- un gaz inerte de purge, ou un mélange de gaz, (G) purifié et chauffé,
ladite substance réactive, ou mélange de substances réactives, (R), étant choisi(e) dans la catégorie des molécules ayant des groupes réactifs ou des groupes terminaux réactifs par rapport aux groupes constitutifs des macromolécules formant les polyesters, lesdits groupes réactifs ou groupes terminaux réactifs étant au moins au nombre de deux pour chaque molécule de substance réactive (R), ainsi la substance réactive, ou le mélange de substances réactives, (R) agit comme des motifs d'allongement de chaîne, ou allongeurs de chaîne, pour parvenir à une augmentation du degré de polymérisation (à savoir des valeurs IV) plus élevée, et/ou plus rapide, et/ou à une température plus basse, et ledit courant de fluide (F) étant incorporé dans ledit gaz inerte de purge (G).

24. Utilisation selon la revendication 23, dans laquelle la substance réactive, ou le mélange de substances réactives, (R) est dilué(e) dans un fluide de transport (V).

25. Utilisation selon la revendication 23 ou 24, dans laquelle ledit gaz inerte de purge (G) est saturé dudit courant de fluide (F).

26. Utilisation selon l'une quelconque des revendications 23 à 25, dans laquelle les substances réactives considérées (R), prises seules et/ou en mélange, appartiennent aux catégories des di-époxydes, des di-anhydrides, des di-isocyanates, des bis(oxoazolines), des bis(di-hydro-oxoazines).

27. Utilisation selon la revendication 24 ou 25, dans laquelle ledit fluide de transport (V) est un fluide ayant une volatilité élevée et un coefficient de diffusion élevé dans le polyester, de préférence un paraxylène ou des xylènes mélangés.
